(19) Europäisches Patentamt
European Patent Office
Office européen des brevets

(11) **EP 4 148 694 A1**

(12) **EUROPEAN PATENT APPLICATION**

(43) Date of publication:
**15.03.2023 Bulletin 2023/11**

(21) Application number: **21196657.7**

(22) Date of filing: **14.09.2021**

(51) International Patent Classification (IPC):
**G07C 9/00** *(2006.01)*     **B60R 25/00** *(2006.01)*

(52) Cooperative Patent Classification (CPC):
**G07C 9/00309; B60R 25/00;** G07C 2009/00555;
G07C 2009/00769; G07C 2209/63

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nagravision Sàrl
1033 Cheseaux-sur-Lausanne (CH)**

(72) Inventor: **DEVALLONNÉ, Luc
1033 Cheseaux-sur-Lausanne (CH)**

(74) Representative: **Poindron, Cyrille et al
Novagraaf International SA
Chemin de l'Echo 3
1213 Onex (CH)**

(54) **ACCESSING AN ASSET WITH USER DEVICE**

(57)     A computer-implemented method, carried out by a first device (200), for accessing an asset (100) using a second device (300), includes:
. establishing a short-range radio connection between the two devices;
. checking that the two devices are in proximity to each other; and
. upon a positive check, granting the second device access to the asset.

To check the proximity, the first device (200) performs the steps of
obtaining a first value of air pressure measured with an air pressure sensor;
obtaining an air pressure difference between said first value of air pressure and a second value of air pressure provided by the second device (300);
verifying that the air pressure difference is within a pre-configured tolerance range.

**FIG. 1**

**Description**

TECHNICAL FIELD

The present disclosure relates to the field of passive (keyless) access to an asset, such as a vehicle, a building, a computer, a space, etc., using a user device.

BACKGROUND

The passive keyless access enables access to a car, a building, an elevator, a computer, a space or any other asset, using an authorized user device, for example a mobile phone. The user first needs to enroll his user device and obtain the right to access the asset. Then, when the user approaches the asset with his user device that can be for example in a user's pocket, the proximity of the user device is detected, the user device is securely identified, the user access right is checked and, in a positive event, access is granted. The passive keyless access is built on short-range radio communications, such a Bluetooth or Bluetooth Low Energy, between the user device and an access control device controlling access to the asset.

The passive keyless access has some vulnerabilities. For example, the access to the asset can be hacked by a relay attack. A relay between two radio devices (for example a car and a smartphone) is an electronic system that extends a radio range of a first of the two devices and thus makes the first device believe that the second device is near, while only one side of the relay is actually close to the first device. Let's consider a car that can be unlocked by a passive keyless access using a user smartphone. During a relay attack, a first attacker is located close to the car and a second attacker is located close to the smartphone. A communication between the car and the smartphone can be initiated by one of the two attackers. For example, the first attacker approaches the car with a device that simulates a smart device having a proximity lock / unlock application. Then, the car responds by initiating an exchange of messages. The two attackers merely relay the messages between the car and the smartphone, without manipulating or even reading the messages, until the car recognizes the smartphone and unlocks (opens its doors). For security reason, the messages between the car and the smartphone are generally encrypted, but the attackers only act by relaying the messages between the car and the smartphone.

It is critical for a future deployment of passive (keyless) access technologies to have solutions for mitigating such relay attacks.

A first known solution is based on a comparison of GPS positions of the car and the user device.

A second known solution is based on a measurement of a round trip time of a radio signal between the car and the user device. The measured round-trip time between the car and the user device should be reasonable and should not fluctuate over time.

The above solutions allow to check that the car and the user device are in proximity to each other before granting the access in a positive event. However, they have some drawbacks. The first solution requires that a passive keyless access application in the car is authorized to access the GPS position of the car and a passive keyless access application in the user device is authorized to access the GPS position of the position of the user device. However, the user may not accept to share the GPS positions of the car and user device. A drawback of the second solution is that it requires to measure the round trip time.

Therefore, there is a need for improving security in passive access to an asset, whose access is controlled by a first device, using a second device.

SUMMARY

The present disclosure concerns a computer-implemented method, carried out by a first device, for accessing an asset using a second device, including the following steps:

- establishing a short-range radio connection between the first device and the second device;
- checking that the first device and the second device are in proximity to each other; and
- upon a positive check that the first device and the second device are in proximity to each other, granting the second device access to the asset; characterized in that the step of checking that the first device and the second device are in proximity to each other includes the steps of:

   obtaining a first value of air pressure measured with an air pressure sensor of the first device;
   obtaining an air pressure difference between said first value of air pressure and a second value of air pressure provided by the second device;
   verifying that the air pressure difference is within a preconfigured tolerance range.

In the present disclosure, the air pressure is used to verify that the two devices are close to each other. When the air pressure at the first device and the air pressure at the second device are identical or have a difference within a preconfigured tolerance range, it is determined that the two devices are close to each other, which allows to satisfy one condition for granting access to the asset. Other condition(s) can be required to grant access to the asset.

When there is a difference of air pressure between the two devices that is out of the tolerance range, it can be determined that the two devices might not be close to each other. In that case, the result of the proximity detection might be considered as ambiguous and/or suspicious. The proximity detection based on a comparison of the air pressure at the first device and at the second device allows to detect a situation that is potentially suspect.

The use of air pressure as an information on proximity between the two devices allows to detect a situation that is potentially suspect in a reliable and efficient manner. Indeed, when the two devices are far from each other, it is highly likely that the air pressure at the first device is significantly different from the air pressure at the second device. In other words, the two devices are highly likely not at the same altitude when they are far from each other. This is due to the distance between the two devices that causes a difference of altitude between the two devices in most cases. Such as difference of altitude between the two devices can be detected based on air pressure measurements as soon as the respective altitudes of the two devices differs by a few centimeters, typically 10-20 centimeters. In the present disclosure, the air pressure difference between the two devices is used to check proximity between the two devices. The air pressure that is an information on altitude is used to detect whether or not the distance (most direct path) between the two devices is short (less than a distance limit). Such an approach is counter-intuitive, but surprisingly provides an efficient and reliable proximity detection.

Another advantage of using the air pressure to detect proximity between the two devices is that the information on the air pressure can generally be obtained without authorization (permission) from the user. A user device like a smartphone usually includes an air pressure sensor and the air pressure measured by the sensor can be accessed and used by any application on the user device without permission from the user (while a permission is asked to the user to access and use the GPS position of the user device).

In an embodiment, the method further includes a step of receiving the second value of air pressure from the second device via the short-range radio connection and a step of calculating the air pressure difference between the first value of air pressure and the second value of air pressure.

It can be more secure to calculate the air pressure difference in the first device.

The first device can be an access control device responsible for controlling access to the asset and the second device can be a user device.

Advantageously, the method further includes the following steps, performed by the first device:
identifying the second device and verifying that the identified second device is authorized to access the asset.

In an embodiment, if the air pressure difference is out of the preconfigured tolerance range, the first device sends a message to the second device to trigger a multi-factor authentication of the second device to access the asset.

When the air pressure difference between the two devices is out of the preconfigured range of tolerance, the situation is potentially suspect. Indeed, a short-range radio connection has been established and, consequently, it is assumed that the second device is within the short-range radio coverage area of the first device. However, the proximity detection based on the air pressure did not allow to confirm the proximity between the two devices. In such a situation, a multi-factor authentication of the second device can be performed to securely authenticate the second device that is connected to the first device via the short-range radio connection. The multi-factor authentication may ask the second device to actively confirm that access to the asset is requested.

In an embodiment, when the air pressure difference is out of the preconfigured tolerance range, the first device sends a request to the second device for a user of the second device to actively confirm that an access to the asset is requested. An active confirmation that access to the asset is requested by the second device corresponds to an (active) action of the user on the second device to ask for access to the asset, for example by activating (clicking) on an access (or unlock) button or icon displayed on the second device.

In this way, when passive access to the asset by detection of proximity between the two devices has failed, the access can still be granted if the user confirms actively the access request and/or if the multi-factor authentication is successful.

In an embodiment, the method further includes a calibration step, carried out by the first device on a first connection between the first device and the second device, comprising:
measuring, by the air pressure sensor of the first device, an initial first value of air pressure, receiving an initial second value of air pressure from the second device, calculating an initial deviation of air pressure between the initial first value and the initial second value of air pressure, and setting the tolerance range as a value range around said initial deviation of air pressure

The range of tolerance can be configured on a first short-range radio connection between the two devices, preferably when the two devices are in a secure environment. An initial difference (deviation) of air pressure is measured. It corresponds to an air pressure offset between the two devices (more precisely, between two air pressure sensors in the two devices respectively). The range of tolerance is set around the air pressure offset. For example, it is centered on the air pressure offset and has a size defined by a tolerance margin $\pm\Delta P$ preconfigured during manufacturing.

In an embodiment, when the determination that the air pressure difference is out of the preconfigured tolerance range is repeatedly followed by granting the second device access to the asset, an updating step is executed by the first device on a next connection between the first device and the second device and comprises:

measuring, by the air pressure sensor of the first device, a current first value of air pressure, receiving a current second value of air pressure from the second device, calculating a current deviation of air pressure between the current first value of air pressure and the current second value of air pressure, and updating the tolerance range as a value range around said current deviation of air pressure.

If the air pressure difference is detected out of the range of tolerance several times, while access to the asset is granted after successfully performing the multi-factor authentication, it may be due to the fact that the tolerance range is not well adjusted. Therefore, on a next connection between the two devices (optionally after asking the user the authorization for updating the tolerance range), the tolerance range is updated.

Alternatively, when the determination that the air pressure difference is out of the tolerance range is repeatedly followed by granting the second device access to the asset, the first device increases the tolerance range by a given amount.

In an embodiment, the step of checking that the first device and the second device are in proximity to each other further includes at least one of a proximity detection based on a round trip time of a radio signal between the first device and the second device and a proximity detection based on GPS positions of the first device and the second device.

The present disclosure also concerns a computer-implemented method for accessing an asset to which access is controlled by a first device, carried out by a second device, including the following steps:

establishing a short-range radio connection between the first device and the second device;
measuring a second value of air pressure with an air pressure sensor of the second device; and
sending to the first device either the second value of air pressure or a difference of air pressure between a first value of air pressure received from the first device and the second value of air pressure, via the short-range radio connection, in order to access the asset.

The present disclosure also concerns

a first device for controlling access to an asset including a short-range radio communication interface, an air pressure sensor, and means adapted to execute the steps of the method firstly defined;
a computer program comprising instructions to cause the first device above defined to execute the steps of the method firstly defined.

The present disclosure also concerns

a second device for accessing an asset, including a short-range radio communication interface, an air pressure sensor, and means adapted to execute the steps of the method secondly defined;
a computer program comprising instructions to cause the second device above defined to execute the steps of the method firstly defined.

BRIEF DESCRIPTION OF THE DRAWINGS

Other features, purposes and advantages of the disclosure will become more explicit by means of reading the detailed statement of the non-restrictive embodiments made with reference to the accompanying drawings.

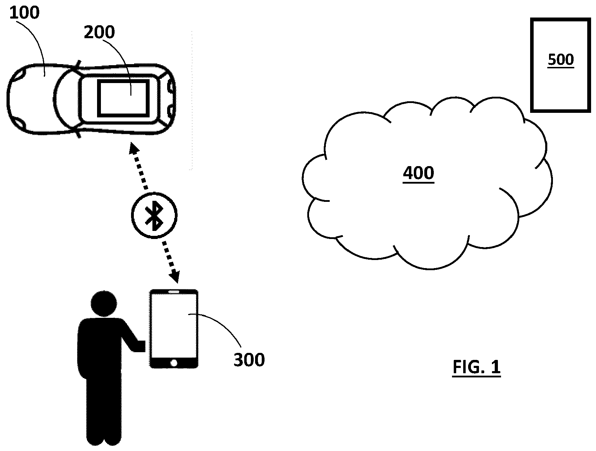

Figure 1 illustrates a system including an access control device to an asset such as a vehicle and a user device that wants to access the asset, according to an embodiment.

Figure 2 illustrates a functional block diagram of the access control device (first device), according to an embodiment.

Figure 3 illustrates a functional block diagram of the user device (second device), according to an embodiment.

Figures 4A and 4B represent a flowchart of a method for accessing the asset using the user device, according to an embodiment.

Figure 5 is a flowchart of a step of checking the proximity of the access control device and the user device, according to an embodiment.

DETAILED DESCRIPTION

The present disclosure concerns a method and a system for accessing an asset 100 (in other words: a resource, device, or system), such as a vehicle, a building, an elevator, a computer, a space, etc., whose access is controlled by a first device 200, by using a second device 300.

In the present disclosure, the terms "accessing the asset" means being authorized to execute an action at the asset (in other words: to action something in the asset). In an embodiment, accessing the asset 100 means to control the execution of an operation of unlocking the asset 100. However, the present disclosure is not limited to the action of unlocking the asset 100. In case of a vehicle, the action can be to start a vehicle's engine for example.

In an embodiment, the first device 200 is an access control device responsible for controlling access to the asset 100 and the second device 300 is a user device, for example a mobile phone and/or a smart device.

The present method can be used to provide a passive access enabling access to an asset, using an authorized user device, without requiring any active action of the user on his user device (and without key).

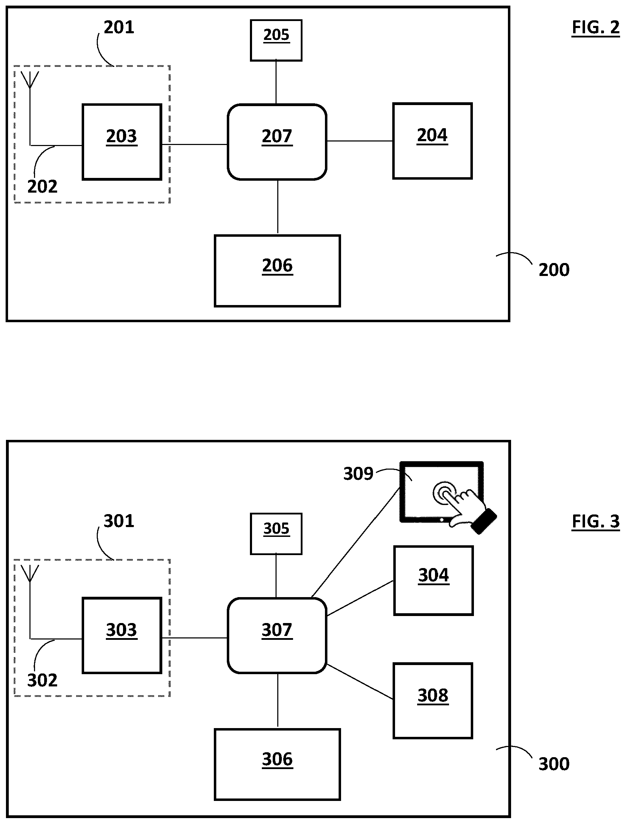

The access control device (first device) 200 is illustrated in figure 2, in an embodiment. It includes a short-range radio communication interface 201, a memory 204, an air pressure sensor 205, an access controller 206, and a central unit or processor 207.

The short-range radio communication interface 201 has an antenna 202 and a radio receiver 203. As well known by the person skilled in the art, the radio receiver 203 receives radio waves through the antenna 202 and converts the information carried by the radio waves to a usable form. It includes different components (mixers, filters, amplifiers, modulators/demodulators, detectors, etc.) that can be implemented in hardware and/or software. The short-range radio communication interface 201 uses a short-range wireless technology standard, for example (in a non-limitative manner) Bluetooth or BLE (Bluetooth Low Energy), for exchanging data between the access control device 200 and another device (for example the user device 300), over short distances.

The air pressure sensor 205 has the role of measuring the air pressure. In operation, the air pressure sensor 205 measures the air pressure at the location of the access control device 200.

The access controller 206 is responsible for controlling the access to the asset 100, using a user device such as the user device 300. It is adapted to execute the steps of the method, described later, for accessing the asset 100, using the user device 300, carried out by the access control device 200. The access controller 206 can be implemented in hardware and/or software. In an embodiment, the access controller 206 is a software component running on the processor or central unit 207.

The access control device 200 can be included in the asset 100 or placed at the entrance of a space 100.

The user device (second device) 300 can be a mobile smart device, for example a mobile phone or smartphone, a tablet, etc... The user device 300 is illustrated in figure 3, in an embodiment. It includes a short-range radio communication interface 301, a memory 304, an air pressure sensor 305, a passive access management module 306, and a central unit or processor 307. Optionally, the user device 300 has a lock/unlock module 308. The user device 300 is also provided with user interface means 309, including a display, preferably a tactile display.

The short-range radio communication interface 301 has an antenna 302 and a radio receiver 303. In operation, the radio receiver 303 receives radio waves through the antenna 302 and converts the information carried by the radio waves to a usable form. It includes different components (mixers, filters, amplifiers, modulators/demodulators, detectors, etc.) that can be implemented in hardware and/or software. The short-range radio communication interface 301 uses a short-range wireless technology standard, for example (in a non-limitative manner) Bluetooth or BLE (Bluetooth Low Energy), for exchanging data for example between the user device 300 and another device (for example the access control device 200), over short distances.

The air pressure sensor 305 has the role of measuring the air pressure. In operation, the air pressure sensor 305 measures the air pressure at the location of the user device 300.

The passive access management module 306 is responsible for managing the passive access to the asset 100 by exchanging messages with the access control device 200. It is adapted to execute the steps of the method for accessing the asset 100, described later, carried out by the user device 300. The passive access management module 306 can be implemented in hardware and/or software. In an embodiment, it is a software component (in other words: an application) running on the processor or central unit 307.

The lock/unlock module 308 is responsible for controlling the operations of locking and unlocking the vehicle 100 using the user device 300 as a remote-control device. It can be a software component (in other words: an application) running on the processor of central unit 307.

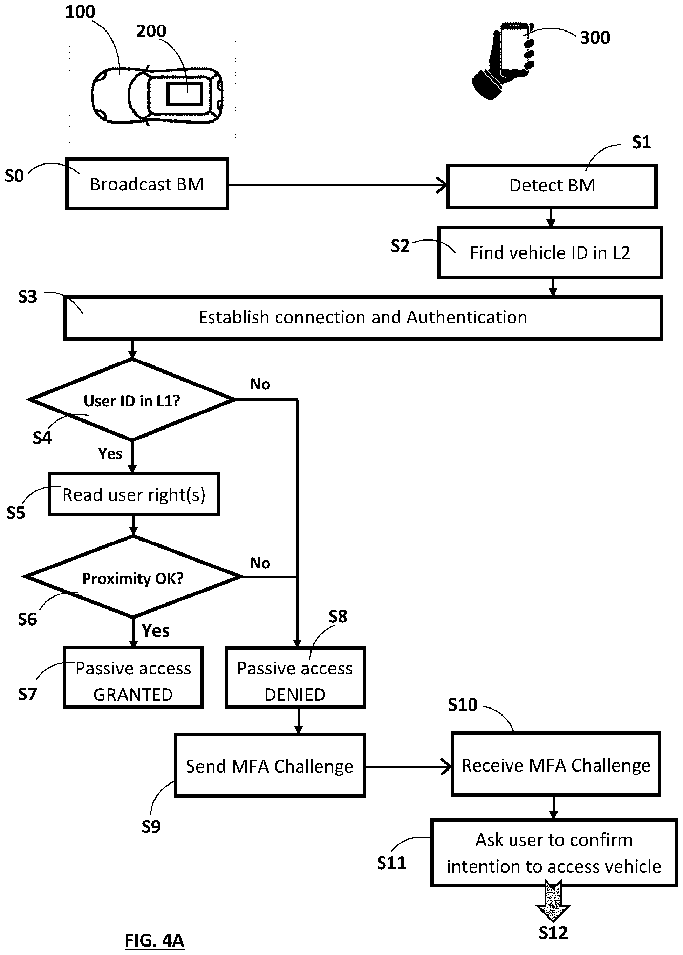

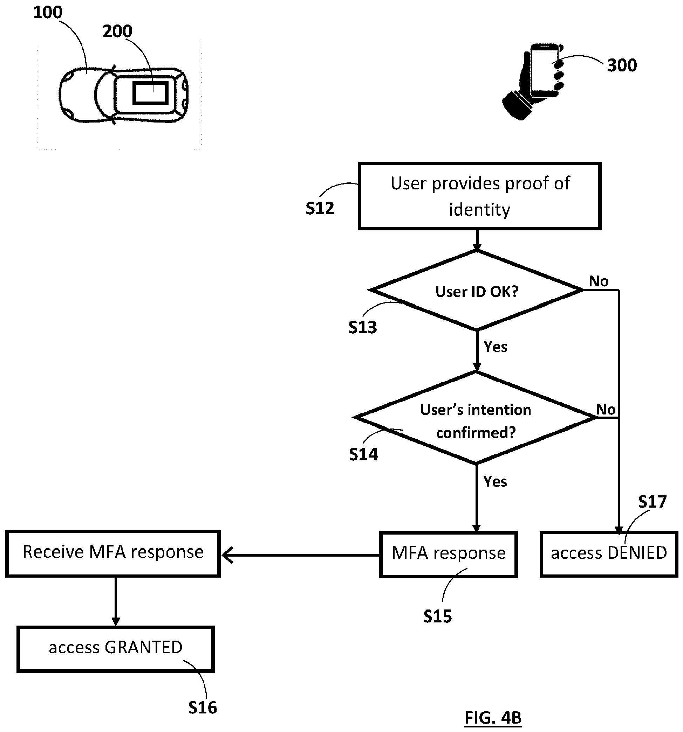

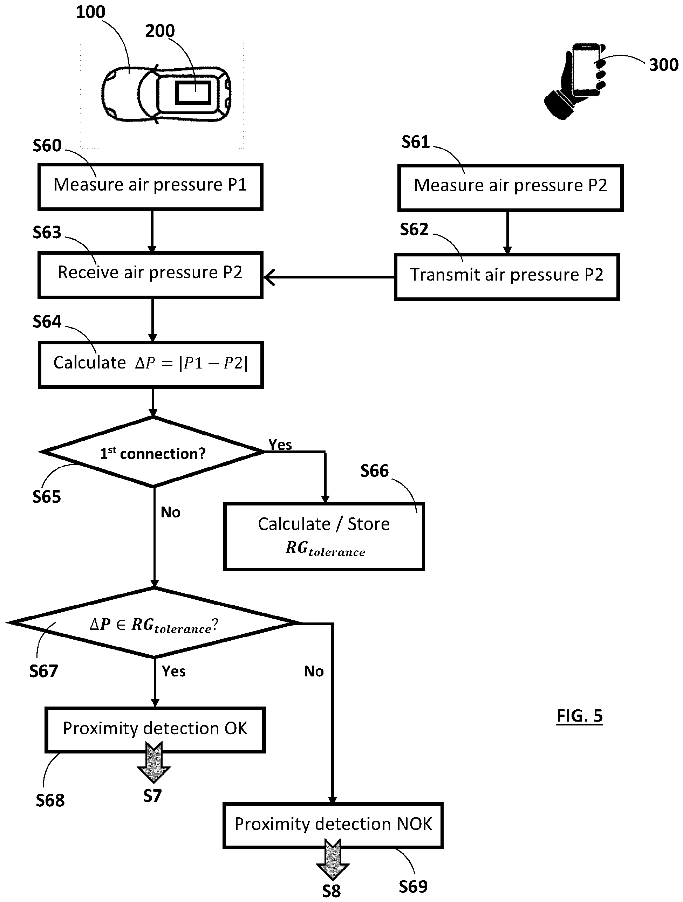

The method for accessing the asset 100, to which access is controlled by the access control device 200 (first device), using the user device 300 (second device), is illustrated by figures 4A, 4B and 5, and will now be described, according to an embodiment. As an illustrative and non-limitative example, the asset 100 is a vehicle and the user device 300 is a mobile phone or smartphone. In the figures 4A, 4B and 5, the steps represented on the left side are the ones executed by the access control device 200 of the vehicle and the steps represented on the right side are the ones executed by the user device 300.

As a prerequisite, the user device 300 is authorized to access the vehicle 100. More precisely, the user device 300 has some right(s) to passively control the execution of one or more actions for operating the vehicle 100 (in other words: without any active action of the user on his user device). The permitted actions (rights) of the user device 300 can include unlocking the vehicle's doors, starting the vehicle's engine, accessing the vehicle's trunk, doing a mechanical maintenance operation.

In an embodiment, the user device 300 obtains the authorization related to the vehicle 100 by connecting to an authorization server 400 through a communication network 500 and performing a secure registration process including an authentication of the user device 300. Then, the authorization server 400 securely transmits the authorization including an identifier of the user device 300, for example its UUID (Universally Unique IDentifier), and the right(s) of the user device 300 to the access control device 200 in the vehicle 100, through the communication network 500. In the vehicle 100, the identifier and the right(s) of the user device 300 are added into an authorization list L1 including the identifiers of each authorized user device and the corresponding right(s). The authorization list L1 can be stored in the memory 204 in the access control device 200 of the vehicle 100.

The user device 300 stores in memory 304 an identifier of the vehicle 100, for example its UUID, in a list L2 of assets that the user device 200 is authorized to access.

In an embodiment, the access control device 200 of the vehicle 100 continuously (repeatedly) broadcasts over the air a message BM, including an identifier of the vehicle 100 (e.g., the vehicle's UUID), for example in the form of a Bluetooth LE peripheral advertisement, in a step S0.

Initially, the user device 300 can be positioned far from the vehicle 100, outside the short-range radio coverage area of the access control device 200 of the vehicle 100.

In a first step S1, the user device 300 approaches the vehicle 100, enters into the short-range radio coverage area of the access control device 200 (e.g., the Bluetooth coverage area or the BLE coverage area), and detects the message BM broadcast by the vehicle 100, including the vehicle's identifier.

In a step S2, the user device 300 extracts the vehicle's identifier from the received BM message, searches it in the stored list L2 and find that the extracted identifier of the vehicle 100 is included in the list L2 of assets that the user device 300 is authorized to access. In case that the vehicle's identifier received in the step S1 is not part of the list L2, the vehicle access process is aborted. The step S2 can be performed by and/or under control of the access management module 306.

In a step S3, upon finding that the vehicle 100 is in the list L2, a short-range connection (e.g., a BLE connection) is established between the user device 300 and the access control device 200 of the vehicle 100.

During the establishment of the connection between the two devices 200, 300, an authentication process is performed by the access control device 200 to identify and authenticate the user device 300. For example, the authentication process uses an authentication challenge sent by the access control device 200 to the user device 300, via the short-range radio connection. The step S3 could include a mutual authentication of the two devices 200 and 300.

After authenticating the user device 300, the access control device 200 verifies that the user device 300 is authorized to access the vehicle 100, here by searching the identifier of the user device 300 in the authorization list L1 stored in the memory 204, in a step S4.

If the identifier of the user device 300 is not included in the list L1 (step S4: No), the process goes to a step S8 of denying passive access (in other words: denying the automatic access, without any active action of the user on his user device 300) to the vehicle 100.

When the user device identifier has been found in the list L1 (step S4: Yes), the access control device 200 reads the right(s) of the user device 300 in the list L1 in memory 204, in a step S5. In the present embodiment, the user device 300 has the right to unlock (open) the vehicle 100.

Before allowing the user device 300 to access the vehicle 100, the access control device 200 performs an operation of checking that the two devices 200 and 300 are in proximity to each other, in a step S6.

If the connection established the access control device 200 of the vehicle 100 and the vehicle is a first connection between the two devices 200, 300, a calibration (configuration) step is executed.

The step S6 is illustrated in figure 5 and will be described in more detail later, according to an embodiment.

When it is detected that the user device 300 and the access control device 200 of the vehicle 100 are in proximity to each other (in other words: that the user device 200 and the vehicle 100 are in proximity to each other), then the access control device grants access to the vehicle 100 to the user device 200 in a step S7. In an embodiment, the doors of the vehicle 100 are automatically unlocked in the step S7. Thus, the unlocking of the vehicle 100 is performed passively (automatically) when the user device 200 is close to the vehicle 100 (typically within the short-range radio coverage area of the access control device 200 of the vehicle 100).

When the proximity detection between the user device 300 and the access control device 200 of the vehicle 100 fails, then the access control device denies passive access to the vehicle 100 for the user device 200, in the step S8. In the present embodiment, the doors of the vehicle 100 are not passively unlocked by the user device 300 in the step S8.

The steps S4, S5, S6 and S7/S8 are performed under control of the access controller 206 in the access control device 200. The steps S1, S2 are performed under control of the access management module 306 in the user device 300.

The step S6 of checking if the user device 300 and the access control device 200, illustrated in figure 6, are in proximity to each other will now be described.

In a step S60, a first value of air pressure P1 is measured by the sensor 205 of the access control device 200.

In parallel, in a step S61, a second value of air pressure P2 is measured by the sensor 305 of the user device 300.

In a step S62, the user device 300 transmits the second value of air pressure P2 to the access control device 200 of the vehicle 100, through the short-range radio connection established in the step S3. In a step S63, the access control device 200 receives the second value of air pressure P2.

In a step S64, the access control device 200 calculates an air pressure difference ∆P between the first value of air pressure P1 and the second value of air pressure P2, according to the expression : *∆P = |P1 - P2|*.

At this stage, it can be verified if the short-range radio connection established between the two devices 200 and 300 is a first connection, in a step S65.

In a positive event (in other words: if this is the first time that the access control device 200 and the user device 300 are connected to each other via a short-range radio connection), a calibration (configuration) step S66 is executed to calibrate or configure a range of tolerance RG_tolerance for the pressure difference between the access control device 200 and the user device 300. In the step S65, the access control device 200 calculates an initial deviation (difference) $\Delta P_0$ of air pressure between the first initial value (first value of air pressure measured by the access control device 200 at the first connection) measured in the step S60 and the second initial value of air pressure (second value of air pressure measured by the used device 200 at the first connection) obtained in the step S63. Then, the access control device 200 sets the tolerance range RG_tolerance as a value range (in other words: an interval) around said initial deviation of air pressure $\Delta P_0$ using a preconfigured margin of tolerance *δP*. The margin of tolerance *δP* can be a constant preconfigured and memorized in the access control device 200 during manufacturing. For example, the range of tolerance for the air pressure difference ∆P is calculated based on the following expression:

$$RG\_tolerance = \Delta P_0 \pm \delta P = [\Delta P_0 - \delta P; \Delta P_0 + \delta P].$$

The range of tolerance RG_tolerance is then stored in the memory 204 of the access control device 200.

In a negative event (in other words: if this is not the first time that the access control device 200 and the user device 300 are connected to each other via a short-range radio connection), the method proceeds with a step S68 of checking the air pressure difference ∆P obtained in the step S64.

In the step S68, it is verified whether or not the air pressure difference ∆P is within the preconfigured tolerance range RG_tolerance. In a positive event (in other words: if the air pressure difference ∆P is within the tolerance range RG_tolerance), it is detected that the access control device 200 and the user device 300 are in proximity to each other, in a step S69. In a negative event (in other words: if the air pressure difference is out of the tolerance range), the detection of proximity between the access control device 200 and the user device 300, based on the air pressure measurements, has failed, which is illustrated by a step S69 in figure 5.

The step S68 (proximity detection has succeeded) is followed by the step S7 of granting access to the vehicle 100.

The step S69 (proximity detection has failed) is followed by the step S8 of denying passive access to the vehicle 100.

When the proximity detection has failed, for example because the air pressure difference ∆P was out of the tolerance range RG_tolerance, the passive access to the vehicle 100 is denied (in other words: refused) at least temporarily.

In an embodiment, in case of failure of the proximity detection, the proximity is considered as ambiguous and/or suspicious and further actions are necessary to allow the user device 200 to access the vehicle 100. Indeed, despite the failure of proximity detection, the vehicle's access might still be granted if the user can authenticate with his user device 200 and actively confirm his intention to access the vehicle 100. Therefore, in an embodiment, the step S8 of denying a passive access to the vehicle 100 by the user device 300 is followed by a step S9 of triggering a multi-factor authentication (MFA) process for the user device 300 to access the vehicle 100. In other words, in the embodiment, when the proximity detection between the access control device 200 of the vehicle 100 and the user device 300 has failed, a multi-factor authentication process is triggered, for example by the access control device 200. In the step S9, the access control device 200 can send an MFA message, also called an MFA challenge (MFA_Challenge) in figure 4A, to the user device 300. The MFA challenge is intended to trigger a multi-factor authentication of the user device 300 for the purpose of accessing the vehicle 100. The user device 300 receives the MFA challenge in a step S10, via the short-range radio connection.

The MFA message or challenge corresponds to a request transmitted from the access control device 200 to the user device 300 for the user to actively confirm that an access to the vehicle 100 is requested by means of the user device 300.

Then, in an embodiment, the user device 300 asks the user to confirm his intention to access the vehicle 100 (here to unlock the vehicle 100 to open it), in a step S11. Upon reception of the MFA challenge, under control the lock/unlock application 308, the user device 300 requests the user to actively confirm his intention to unlock or open the vehicle 100. For example, the request is a message displayed on the display 309 of the user device 300. In the present embodiment, in order to confirm his intention to access the vehicle 100, the user needs to provide proof of his identity for example by entering a password and/or code, and/or by performing a biometric identification (e.g., face recognition, fingerprint recognition and/or iris recognition, etc.). The password and/or code can include a password to unlock the smart device and/or a code received for example by SMS or email. Any other method to prove the identity of the user and confirm his intention to access the vehicle could be used.

In a step S12, the user of the device 300 provides proof of his identity using the user device 300, for example through biometric identification. The identity of the user is checked in a step S13.

In the present embodiment, the action of successfully providing proof of identity of the user causes the user device 300 to unlock. In case that the user's identity has been successfully checked, the user can be asked by the lock/unlock application 308 to actively confirm his intention to unlock the vehicle 100, for example by clicking on a button displayed on the user device display 309, in a step S14.

When the user has successfully provided proof of his identity (in other words: the user has successfully identified and authenticated himself) and positively confirms of his intention to access the vehicle 100, the user device 300 transmits a (positive) MFA response to the access control device 200, in a step S15. Then, upon reception of the MFA response, the access control device 200 grants access to the vehicle 100 to the user device 300 and, here, unlocks the vehicle's doors, in a step S16.

In an embodiment, when the user fails to provide proof of his identity in the steps S12-S13 or does not confirm any intention to access the vehicle 100 in the step S14, the user device 300 does not transmit a MFA response to the access control device 200. In such a case, after expiration of a preconfigured period of time starting from the transmission of the MFA challenge without any MFA response, access to the vehicle 100 is denied by the access control device 200. Consequently, the vehicle's door remain locked. Alternatively, the user device 300 could transmit a negative MFA response, indicating that the user identity verification has failed or the user did not confirm his intention to access the vehicle 100.

Instead of transmitting an MFA message to the user device 300 upon failure of the proximity detection, the access control device 200 could transmit to the user device 300 another type of message requesting the user to confirm an access to the vehicle 100. More generally, in case of failure of the proximity detection, the user is requested to confirm his agreement through any existing authenticated mean (for example, with his user device by pressing a button).

In an embodiment, when the determination that the air pressure difference ΔP is out of the tolerance range RG_tolerance is repeatedly followed by a step of granting access to the vehicle 100 to the user device 300, for example after successfully performing the multi-factor authentication, an adjustment (or updating) of the tolerance range is executed by the access control device 200 on a next connection between the access control device 200 and the user device 300. The term "repeatedly" means here that the above-described situation (i.e., the proximity detection based on the air pressure has failed but then access is nevertheless granted) occurs several times and exceeds a predefined limit. The limit can be a number of times the situation occurs, a statistical limit, or any appropriate limit above which it can be considered that the proximity detection based on the air pressure has abnormally failed.

The adjustment (updating) step can include:

measuring, by the air pressure sensor 205 of the access control device 200, a current first value of air pressure $P1_c$,
measuring, by the air pressure sensor 305 of the user device 300, a current second value of air pressure $P2_c$,
transmitting the current second initial value of air pressure $P2_c$ from the user device 300 to the access control device 200,
calculating a current deviation of air pressure $\Delta P_c$ between the current first value of air pressure $P1_c$ and the current second value of air pressure $P2_c$, and updating (adjusting) the tolerance range RG_tolerance as a value range around said current deviation of air pressure $\Delta P_c$ using the following expression:

$$RG'_{tolerance} = \Delta P_c \pm \delta P = [\Delta P_c - \delta P; \Delta P_c + \delta P]$$

where

$RG'_{tolerance}$ is the updated tolerance range;

$\Delta P_c$ is the current difference (deviation) of air pressure;

$\delta P$ is the preconfigured tolerance margin (for example memorized during manufacturing).

In a variant, when the determination that the air pressure difference $\Delta P$ is out of the tolerance range RG_tolerance is repeatedly followed by granting the user device 300 access to the vehicle 100 , the access control device 200 increases the tolerance range, for example by a preconfigured (fixed) amount $\varepsilon$ using the following expression:

$$RG'_{tolerance} = RG_{tolerance} \pm \varepsilon$$

where

$RG'_{tolerance}$ represents the updated (adjusted) tolerance range;

$RG_{tolerance}$ represents the previous tolerance range;

$\pm\varepsilon$ indicates that the previous tolerance range is extended by adding $\varepsilon$ to the upper limit of the tolerance range $RG_{tolerance}$ and subtracting $\varepsilon$ to the lower limit of the tolerance range $RG_{tolerance}$.

In an embodiment, the step S6 of checking that the access control device 200 and the user device 300 are in proximity to each other further includes another type of proximity detection, such as a proximity detection based on a round trip time (RTT) of a radio signal between the first device and the second device, and/or a proximity detection based on the GPS positions of the two devices 200 and 300, as well known by the person skilled in the art. For example, when the proximity detection based on the air pressure fails, a second proximity detection is performed (e.g., based on the RTT or on GPS positions). If the second proximity detection is successful, the access is granted. If the second proximity detection fails, a multi-factor authentication is triggered and/or an active confirmation of the intention of the user to access the vehicle is requested.

In the above description, the air pressure difference is calculated by the access control device (first device). Alternatively, the air pressure difference could be calculated by the user device (second device). In that case, the access control device transmits the measured value of air pressure to the user device via the short-range radio connection. Then, the air pressure difference is transmitted from the user device to the access control device via the short-range radio connection. The communication between the two devices are preferably secure (typically by encryption using for example a shared secret key).

The present disclosure also concerns:

- a computer program comprising instructions to cause the access control device (first device) to execute those of the steps of the described method that are performed by said access control device 200;
- a computer-readable medium having stored thereon the above computer program.

The present disclosure also concerns:

- a computer program comprising instructions to cause the user device (second device) to execute those of the steps of the described method that are performed by said user device 300;
- a computer-readable medium having stored thereon the above computer program.

## Claims

1. A computer-implemented method, carried out by a first device (200), for accessing an asset (100) using a second device (300), including the following steps:

   . establishing (S3) a short-range radio connection between the first device (200) and the second device (300);
   . checking (S6) that the first device (200) and the second device (300) are in proximity to each other; and
   . upon a positive check that the first device (200) and the second device (300) are in proximity to each other, granting the second device (300) access to the asset (100);

   **characterized in that** the step of checking that the first device (200) and the second device (300) are in proximity to each other includes the steps of:

obtaining (S60) a first value of air pressure (P1) measured with an air pressure sensor of the first device (200);

obtaining (S63, S64) an air pressure difference (∆P) between said first value of air pressure (P1) and a second value of air pressure (P2) provided by the second device (300);

verifying that the air pressure difference (∆P) is within a preconfigured tolerance range (RG_tolerance).

2. The computer implemented method according to claim 1, further including a step of receiving (S63) the second value of air pressure (P2) from the second device (300) via the short-range radio connection and a step of calculating (S64) the air pressure difference between the first value of air pressure (P1) and the second value of air pressure (P2).

3. The computer-implemented method according to claim 1 or 2, wherein the first device (200) is an access control device responsible for controlling access to the asset (100) and the second device is a user device (300).

4. The computer-implemented method according to any of claims 1 to 3, further including the following steps, performed by the first device:

identifying (S3) the second device (300) and verifying that the identified second device (300) is authorized to access the asset (100).

5. The computer-implemented method of according to any of claims 1 to 4, wherein, if the air pressure difference is out of the preconfigured tolerance range, the first device (200) sends (S9) a message to the second device (300) to trigger a multi-factor authentication of the second device (300) to access the asset (100).

6. The computer-implemented method of any according to any of claims 1 to 5, wherein, when the air pressure difference (∆P) is out of the preconfigured tolerance range (RG_tolerance), the first device (200) sends a request to the second device (300) for a user of the second device to actively confirm that an access to the asset is requested.

7. The computer-implemented method of according to any of claims 1 to 6, further including a calibration step (S66), carried out by the first device (200) on a first connection between the first device (200) and the second device (300), comprising:

measuring (S60), by the air pressure sensor of the first device (200), an initial first value of air pressure, receiving an initial second value of air pressure (P2) from the second device (300), calculating (S64) an initial deviation of air pressure (∆P) between the initial first value and the initial second value of air pressure, and setting the tolerance range (RG_tolerance) as a value range around said initial deviation of air pressure (∆P).

8. The computer-implemented method according to claim 5, wherein, when the determination that the air pressure difference (∆P) is out of the preconfigured tolerance range (RG_tolerance) is repeatedly followed by granting the second device (300) access to the asset (100), an updating step is executed by the first device (200) on a next connection between the first device (200) and the second device (300) and comprises:

measuring, by the air pressure sensor of the first device (200), a current first value of air pressure, receiving a current second value of air pressure from the second device, calculating a current deviation of air pressure between the current first value of air pressure and the current second value of air pressure, and updating the tolerance range as a value range around said current deviation of air pressure.

9. The computer-implemented method according to claim 5, wherein, when the determination that the air pressure difference (∆P) is out of the tolerance range (RG_tolerance) is repeatedly followed by granting the second device (300) access to the asset (100), the first device (200) increases the tolerance range by a given amount.

10. The computer-implemented method according to any of claims 1 to 9, wherein the step of checking that the first device (200) and the second device (300) are in proximity to each other further includes at least one of a proximity detection based on a round trip time of a radio signal between the first device and the second device and a proximity detection based on GPS positions of the first device and the second device.

11. A computer-implemented method for accessing an asset (100) to which access is controlled by a first device (200), carried out by a second device (300), including the following steps:

establishing (S3) a short-range radio connection between the first device (200) and the second device (300);

measuring a second value of air pressure (P2) with an air pressure sensor of the second device (300); and

sending to the first device (200) either the second value of air pressure (P2) or a difference of air pressure (∆P) between a first value of air pressure (P1) received from the first device (200) and the second value of air pressure (P2), via the short-range radio connection, in order to access the asset (100).

12. A first device (200) for controlling access to an asset (100) including a short-range radio communication interface (201),

   an air pressure sensor (205),
   and means (206, 207) adapted to execute the steps of the method according to any of claims 1 to 10.

13. A second device (300) for accessing an asset (100), including

   a short-range radio communication interface (301),
   an air pressure sensor (305),
   and means (306, 307) adapted to execute the steps of the method according to claim 11.

14. A computer program comprising instructions to cause the first device (200) according to claim 12 to execute the steps of the method according to claim 1.

15. A computer program comprising instructions to cause the second device (300) according to claim 13 to execute the steps of the method according to claim 11.

100

200

500

400

300

FIG. 1

FIG. 2

FIG. 3

100

200

300

S0 — Broadcast BM

S1 — Detect BM

S2 — Find vehicle ID in L2

S3 — Establish connection and Authentication

S4 — User ID in L1?  → No

Yes

S5 — Read user right(s)

S6 — Proximity OK? → No

Yes

S7 — Passive access GRANTED

S8 — Passive access DENIED

S9 — Send MFA Challenge

S10 — Receive MFA Challenge

S11 — Ask user to confirm intention to access vehicle

S12

**FIG. 4A**

**100**
**200**

**300**

**S12** │ User provides proof of identity

User ID OK? ──No──→

**S13**

Yes

User's intention confirmed? ──No──→

**S14**

Yes

**S17**

Receive MFA response ←──────── MFA response          access DENIED

**S15**

access GRANTED

**S16**                                      **FIG. 4B**

**100**

**200**

**300**

**S60**

Measure air pressure P1

**S61**

Measure air pressure P2

**S63**

Receive air pressure P2

**S62**

Transmit air pressure P2

**S64**

Calculate $\Delta P = |P1 - P2|$

**S65**

1$^{st}$ connection?

Yes

No

**S66**

Calculate / Store $RG_{tolerance}$

**S67**

$\Delta P \in RG_{tolerance}$?

Yes

No

**S68**

Proximity detection OK

**S7**

**S69**

Proximity detection NOK

**S8**

FIG. 5

Europäisches
Patentamt

European
Patent Office

Office européen
des brevets

# EUROPEAN SEARCH REPORT

Application Number

EP 21 19 6657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2020/247361 A1 (NOZAKI TAKASHI [JP])<br>6 August 2020 (2020-08-06)<br>* abstract *<br>* paragraph [0007] *<br>* paragraph [0017] - paragraph [0039] *<br>* paragraph [0041] - paragraph [0080] *<br>* claims; figures * | 1-4,<br>10-15<br>5,6,8,9 | INV.<br>G07C9/00<br>B60R25/00 |
| X | EP 2 942 758 A1 (BASICWORX ENGINEERING GMBH [DE]) 11 November 2015 (2015-11-11)<br>* abstract *<br>* paragraph [0017] - paragraph [0022] *<br>* paragraph [0034] - paragraph [0042] *<br>* paragraph [0048] - paragraph [0058] *<br>* claims; figures * | 1-4,<br>11-15 | |
| X | US 2007/273553 A1 (ALBRECHT STEFAN [DE] ET AL) 29 November 2007 (2007-11-29)<br>* paragraph [0010] - paragraph [0014] *<br>* paragraph [0021] - paragraph [0031] *<br>* figures * | 1-4,7,<br>10-15 | |
| Y<br>A | DE 10 2018 004997 A1 (GIESECKE & DEVRIENT MOBILE SECURITY GMBH)<br>24 December 2019 (2019-12-24)<br>* paragraph [0029] - paragraph [0037] * | 5,6,8,9<br>1,11-15 | TECHNICAL FIELDS SEARCHED (IPC)<br><br>G07C<br>B60R |
| Y | US 2010/265035 A1 (ZILLER BORIS [DE])<br>21 October 2010 (2010-10-21)<br>* paragraph [0010] - paragraph [0020] *<br>* paragraph [0023] - paragraph [0026] * | 8,9 | |
| A | US 2020/198579 A1 (YAMAGUCHI YUYA [JP])<br>25 June 2020 (2020-06-25)<br>* abstract *<br>* paragraph [0023] - paragraph [0038] *<br>* paragraph [0083] - paragraph [0097] *<br>* figures 1,2,7,8 * | 1-15 | |

The present search report has been drawn up for all claims

| Place of search | Date of completion of the search | Examiner |
|---|---|---|
| The Hague | 25 February 2022 | Miltgen, Eric |

EPO FORM 1503 03.82 (P04C01)

## ANNEX TO THE EUROPEAN SEARCH REPORT
## ON EUROPEAN PATENT APPLICATION NO.

EP 21 19 6657

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2022

| Patent document cited in search report | | Publication date | Patent family member(s) | | Publication date |
|---|---|---|---|---|---|
| US 2020247361 | A1 | 06-08-2020 | CN | 111315948 A | 19-06-2020 |
| | | | JP | 6880229 B2 | 02-06-2021 |
| | | | JP | WO2019097807 A1 | 19-11-2020 |
| | | | US | 2020247361 A1 | 06-08-2020 |
| | | | WO | 2019097807 A1 | 23-05-2019 |
| EP 2942758 | A1 | 11-11-2015 | NONE | | |
| US 2007273553 | A1 | 29-11-2007 | DE | 112007000600 A5 | 26-02-2009 |
| | | | US | 2007273553 A1 | 29-11-2007 |
| | | | WO | 2007137655 A1 | 06-12-2007 |
| DE 102018004997 | A1 | 24-12-2019 | DE | 102018004997 A1 | 24-12-2019 |
| | | | EP | 3811648 A1 | 28-04-2021 |
| | | | US | 2021362677 A1 | 25-11-2021 |
| | | | WO | 2019242880 A1 | 26-12-2019 |
| US 2010265035 | A1 | 21-10-2010 | CN | 101866537 A | 20-10-2010 |
| | | | DE | 102009002448 A1 | 21-10-2010 |
| | | | EP | 2242027 A2 | 20-10-2010 |
| | | | US | 2010265035 A1 | 21-10-2010 |
| US 2020198579 | A1 | 25-06-2020 | JP | 2020101004 A | 02-07-2020 |
| | | | US | 2020198579 A1 | 25-06-2020 |

EPO FORM P0459

For more details about this annex : see Official Journal of the European Patent Office, No. 12/82